# EUROPÄISCHE PATENTSCHRIFT

(11) **EP 1 123 474 B1**
(45) Veröffentlichungstag und Bekanntmachung des Hinweises auf die Patenterteilung: **02.01.2003**
(21) Anmeldenummer: 99953866.3
(22) Anmeldetag: 16.10.1999
(51) Int. Cl.: F16H 61/02, F16H 59/72

(54) **VERFAHREN ZUR STEUERUNG EINER HOCHTEMPERATUR-BETRIEBSART EINES ELEKTRONISCH GESTEUERTEN, AUTOMATISCHEN SCHALTGETRIEBES**
METHOD FOR CONTROLLING A HIGH TEMPERATURE OPERATING MODE OF AN ELECTRONICALLY CONTROLLED AUTOMATIC GEARBOX
PROCEDE DE REGULATION D'UN MODE DE FONCTIONNEMENT A HAUTE TEMPERATURE D'UNE BOITE DE VITESSES AUTOMATIQUE A REGULATION ELECTRONIQUE

(30) Priorität: 24.10.1998 DE 19849058
(43) Veröffentlichungstag der Anmeldung: 16.08.2001
(73) Patentinhaber: ZF FRIEDRICHSHAFEN Aktiengesellschaft, 88038 Friedrichshafen (DE)
(72) Erfinder: HENNEKEN, Markus, D-88079 Kressbronn (DE); JAUCH, Friedemann, D-88074 Meckenbeuren (DE); HERBSTER, Kai-Uwe, D-88046 Friedrichshafen (DE); SCHULER, Franz-Josef, D-88079 Kressbronn (DE); MAUZ, Thomas, D-88079 Kressbronn (DE)
(86) Internationale Anmeldenummer: EP9907870
(87) Internationale Veröffentlichungsnummer: WO00025044

(56) Entgegenhaltungen:
- EP-A- 0 317 936
- DE-A- 3 928 814
- US-A- 4 733 581
- US-A- 5 556 349
- US-A- 5 680 307
- US-A- 5 748 472

## Beschreibung

Die Erfindung betrifft ein Verfahren zur Steuerung einer Hochtemperatur-Betriebsart eines elektronisch gesteuerten, automatischen Schaltgetriebes.

Unter bestimmten Betriebsbedingungen eines Fahrzeugs können hohe Temperaturen im Getriebe erreicht werden. Werden bestimmte Temperaturgrenzen überschritten, so können Bauteilbeschädigungen auftreten oder unerwünschte chemische Veränderungen des Getriebeöls stattfinden. Hohe Temperaturen treten dann auf, wenn hohe Wärmemengen erzeugt werden und/oder nur eine geringe Wärmeabfuhr erfolgt. Kritisch sind Betriebsbedingungen mit kleinen Motordrehzahlen, bei denen Flüssigkeitspumpen im Kühlsystem nur mit kleinen Drehzahlen betrieben werden, so daß die Wärmeabfuhr eingeschränkt ist. Hohe Temperaturen können auch auftreten, wenn ein dem Getriebe vorgeschalteter, hydrodynamischer Wandler mit offener Überbrückungskupplung betrieben wird. Bei offener Überbrückungskupplung können im Wandler durch hydraulische Verluste erhebliche Wärmemengen erzeugt werden. Ungünstig ist weiterhin, daß der Wandler in der Regel dann mit offener Überbrückungskupplung betrieben wird, wenn relativ geringe Motordrehzahlen anliegen.

Hohe Temperaturen können auch an den Reibflächen einer mit geregeltem Schlupf betriebenen Überbrückungskupplung auftreten.

Es sind Getriebesteuerungen bekannt, in denen ein spezielles, temperatursenkendes Hochtemperatur-Fahrprogramm abgelegt ist, auf welches bei hohen Getriebetemperaturen zugegriffen wird. Ein solches Hochtemperatur-Fahrprogramm beeinflußt den Wärmehaushalt eines Getriebes wesentlich und ist geeignet, die Getriebetemperatur zu senken. Allerdings ist für den Fahrer deutlich spürbar, wenn auf ein solches Hochtemperatur-Fahrprogramm zugegriffen wird: Die unteren Gänge werden weit ausgedreht, es tritt ein höherer Verbrauch sowie eine höhere Geräusch- bzw. Vibrationsbelastung auf. Das spezielle Hochtemperatur-Fahrprogramm umfaßt sowohl ein Schaltprogramm zur Gangwechselsteuerung als auch ein Wandler-Schaltprogramm zur Ansteuerung der Überbrükkungskupplung.

Aufgrund der negativen Auswirkungen auf den Fahrbetrieb ist es wünschenswert, nur dann auf das spezielle Hochtemperatur-Fahrprogramm zuzugreifen, wenn es unbedingt notwendig ist. In der EP 0 751 323 A2 wird daher vorgeschlagen, die Grenztemperatur, oberhalb der auf das spezielle Hochtemperatur-Schaltprogramm zugegriffen wird, abhängig vom Temperatur-Gradienten zu variieren. Der Wert der Grenztemperatur ist höher, wenn der Temperaturanstieg nur langsam erfolgt. Wird jedoch die Grenztemperatur überschritten, wird der Fahrkomfort spürbar eingeschränkt.

In der DE 197 55 128 A1 wird vorgeschlagen, das MotorDrehmoment zur reduzieren, wenn die Getriebetemperatur einen vorbestimmten Grenzwert überschreitet. Dies hat ebenfalls eine sehr starke Einschränkung des Fahrbetriebs zur Folge.

Des weiteren ist z. B. aus der DE 39 22 051 C2 ein Verfahren zur Steuerung eines automatischen Schaltgetriebes bekannt, bei dem in einem elektronischen Steuergerät zur Gangwechselsteuerung mehrere Schaltprogramme abgelegt sind, auf welche, abhängig von einer Fahraktivitäts-Kenngröße, zugegriffen wird. Abhängig vom Wert der Fahraktivitäts-Kenngröße wird auf ein verbrauchsoptimiertes Schaltprogramm, auf ein leistungsoptimiertes Schaltprogramm oder auf eines von dazwischenliegenden Schaltprogrammen zugegriffen. Ein unzulässiges Ansteigen der Getriebe- oder Motortemperatur kann jedoch durch dieses Verfahren nicht gelöst werden.

Die gattungsbildende US 5556 349 A zeigt ein automatischer Getriebe mit einem Hochtemperatur-Schaltprogramm.

Der Erfindung liegt die Aufgabe zugrunde, eine Hochtemperatur-Betriebsart für ein elektronisch gesteuertes, automatisches Schaltgetriebe zu schaffen, deren für den Fahrer spürbare negative Auswirkungen reduziert sind.

Erfindungsgemäß wird diese Aufgabe durch ein Verfahren mit den Merkmalen des Hauptanspruchs gelöst. Die Unteransprüche enthalten vorteilhafte Ausgestaltungen der Erfindung.

Es wird also vorgeschlagen, wenn ein aktueller Temperaturwert, beispielsweise eine gemessene Getriebesumpftemperatur, größer ist als ein erster Grenzwert, einen Bewertungszähler, der normalerweise mit der Fahraktivitäts-Kenngröße belegt ist, mit einem Hochtemperatur-Betriebswert zu belegen, dem ein ohnehin vorhandenes Schaltprogramm zugeordnet ist, welches auch temperatursenkende Eigenschaften aufweist.

Der Erfindung liegt die Erkenntnis zugrunde, daß ein eher leistungsoptimiertes Schaltprogramm, auf das normalerweise, d. h. unterhalb der ersten Grenztemperatur, aufgrund einer sportlichen Fahrweise des Fahrers zugegriffen wird, auch temperatursenkende Eigenschaften hat.

Das Drehzahlniveau eines eher leistungsoptimierten Schaltprogramms ist erhöht, so daß die Wärmeabfuhr günstig ist und auch der hydrodynamische Wandler überwiegend mit geschlossener Überbrückungskupplung betrieben wird. Das Schaltprogramm, auf welches zugegriffen wird, kann ein konkretes oder aber ein durch Interpolation zwischen konkreten Schaltprogrammen ermitteltes Schaltprogramm sein. Es hat sich gezeigt, daß in vielen Fällen ein weiterer Temperaturanstieg durch den Zugriff auf ein solches mehr leistungsoptimiertes Schaltprogramm verhindert werden kann, wobei die für den Fahrer spürbaren Auswirkungen dieser Hochtemperatur-Betriebsart wesentlich weniger nachteilig sind.

Ein weiterer Vorteil der Erfindung ist, daß ein ohnehin vorhandenes Schaltprogramm genutzt wird, wodurch Speicherplatz in dem elektronischen Steuergerät gespart und Applikationsaufwand verringert wird.

Um dennoch auch unter extremen Betriebsbedingungen eine Überhitzung der Aggregate zu vermeiden, ist es vorteilhaft, wenn ein zweiter, größerer Temperatur-Grenzwert vorgesehen ist, und daß zur Gangwechselsteuerung direkt auf ein spezielles Hochtemperatur-Schaltprogramm zugegriffen wird, wenn der aktuelle Temperaturwert größer ist als dieser zweite Grenzwert. Durch diese Ausgestaltung der Erfindung werden zwei Stufen der Hochtemperatur-Betriebsart bereitgestellt. Hierbei wird der zweite, größere Grenzwert nur sehr selten erreicht, so daß das unkomfortabel zu fahrende spezielle Hochtemperatur-Schaltprogramm nur sehr selten aktiviert werden muß.

Bei automatischen Schaltgetrieben, denen ein hydrodynamischer Wandler mit einer Überbrückungskupplung vorgeschaltet ist, kann es vorteilhaft sein, daß auf ein spezielles Hochtemperatur-Wandler-Schaltprogramm zugegriffen wird, wenn der aktuelle Temperaturwert größer ist als der erste Temperatur-Grenzwert. Während also nach Überschreiten der ersten Grenztemperatur zur Gangwechselsteuerung auf ein ohnehin vorhandenes Schaltprogramm, welches einem bestimmten Wert der Fahraktivitäts-Kenngröße zugeordnet ist, zugegriffen wird, wird zur Ansteuerung der Überbrückungskupplung auf ein erstes Hochtemperatur-Wandler-Schaltprogramm zugegriffen. Ein solches Hochtemperatur-Wandler-Schaltprogramm weist gegenüber dem normalerweise, d. h. unterhalb der ersten Grenztemperatur, benutzten Wandler-Schaltprogramm einen erweiterten Bereich auf, in dem die Überbrükkungskupplung geschlossen ist. Es ist jedoch auch möglich, auch auf das Wandler-Schaltprogramm zuzugreifen, welches normalerweise dem entsprechenden Schaltprogramm zur Gangwechselsteuerung zugeordnet ist.

Wenn ein zweites Hochtemperatur-Wandler-Schaltprogramm vorgesehen ist, auf das zugegriffen wird, wenn der aktuelle Temperaturwert größer ist als der zweite Grenzwert, kann ebenso, wie bei den Schaltprogrammen zur Gangwechselsteuerung, auch bei den Wandler-Schaltprogrammen stufenweise auf höhere Temperaturen reagiert werden. Beim ersten Hochtemperatur-Wandler-Schaltprogramm können so zugunsten einer besseren Fahrbarkeit noch Bereiche mit offener oder geregelt schlupfender Überbrückungskupplung zugelassen werden, wenn extreme Bedingungen durch das zweite Hochtemperatur-Wandler-Schaltprogramm abgedeckt sind.

Ein einfacher Ausstieg aus der Funktion ist möglich, wenn der aktuelle Temperaturwert mit einem dritten Grenzwert verglichen und der Bewertungszähler wieder mit dem aktuellen Wert der Fahraktivitäts-Kenngröße belegt wird, wenn der aktuelle Temperaturwert kleiner ist als dieser dritte Grenzwert. Der dritte Grenzwert liegt unterhalb des ersten Grenzwerts. Durch diese Temperaturhysterese wird ein Hin- und Herspringen zwischen den Betriebszuständen vermieden.

Auch der Wärmehaushalt des Antriebsmotors wird durch die Getriebeansteuerung beeinflußt. In vielen Fällen kann auch die Motortemperatur durch ein erhöhtes Drehzahlniveau abgesenkt werden. Eine vorteilhafte Ausgestaltung der Erfindung sieht daher vor, daß sowohl eine aktuelle Getriebetemperatur als auch eine aktuelle Motortemperatur laufend gemessen werden. Der Motortemperaturwert wird mit einem ersten Motortemperatur-Grenzwert und der Getriebetemperaturwert mit einem ersten Getriebetemperatur-Grenzwert verglichen. Der Bewertungszähler wird dann mit einem Hochtemperatur-Betriebswert belegt, wenn mindestens einer der Temperaturwerte von Motor oder Getriebe größer ist als der entsprechende erste Motor- bzw. Getriebe-Grenzwert.

Entsprechend können zweite Motor- bzw. Getriebetemperatur-Grenzwerte vorgegeben werden, wobei zur Gangwechselsteuerung direkt auf ein spezielles Hochtemperatur-Schaltprogramm zugegriffen wird, wenn mindestens einer der Temperaturwerte von Motor oder Getriebe größer ist als der entsprechende zweite Grenzwert.

Werden sowohl eine Motortemperatur als auch eine Getriebetemperatur berücksichtigt, so kann für den Ausstieg aus der Hochtemperatur-Betriebsart vorgesehen sein, daß sowohl der aktuelle Motortemperaturwert als auch der aktuelle Getriebetemperaturwert kleiner sind als dritte Motor- bzw. Getriebetemperatur-Grenzwerte.

Da sich die hinsichtlich Temperaturreduktion optimalen Betriebsbedingungen von Motor und Getriebe unterscheiden können, kann es vorteilhaft sein, für Motor und Getriebe unterschiedliche Hochtemperatur-Betriebswerte festzulegen. Der Hochtemperatur-Betriebswert, mit dem der Bewertungszähler belegt wird, kann gleich dem Maximum oder gleich dem Mittelwert aus dem Motor-Hochtemperatur-Betriebswert und dem Getriebe-Hochtemperatur-Betriebswert gesetzt werden.

Eine noch besser an die tatsächlichen Temperaturwerte angepaßte Reaktion des Getriebes wird dadurch erreicht, daß der Hochtemperatur-Betriebswert bzw. die Hochtemperatur-Betriebswerte abhängig von dem aktuellen Motor- bzw. Getriebetemperaturwert ermittelt werden, wobei höheren Temperaturwerten höhere Hochtemperatur-Betriebswerte zugewiesen werden. Höhere Temperaturwerte bedingen dann höhere Werte des Bewertungszählers, so daß auf ein Fahrprogramm mit höherem Drehzahlniveau zugegriffen wird. Werden die Schaltprogramme bzw. Schaltdrehzahlen abhängig vom aktuellen Wert des Bewertungszählers durch Interpolation zwischen benachbarten Schaltprogrammen bestimmt, bewirkt jede kleine Änderung des Bewertungszählers infolge einer Temperaturerhöhung eine Änderung bezüglich des Schaltprogramms. Es ist also ein stetiger Zusammenhang zwischen Temperatur und Schaltdrehzahlen vorhanden. Sprünge im Getriebeverhalten werden vermieden. Einem Temperaturanstieg im Motor oder im Getriebe wird allmählich entgegengewirkt. Je höher die Temperaturen sind, desto mehr leistungsorientiert ist das Schaltprogramm. Der Zusammenhang zwischen den Hochtemperatur-Betriebswerten und den Temperaturwerten kann beispielsweise durch eine applizierbare Kennlinie in der elektronischen Getriebesteuerung hergestellt werden.

In einer vorteilhaften Ausgestaltung der Erfindung ist vorgesehen, daß dem Bewertungszähler nur dann ein Hochtemperatur-Betriebswert zugewiesen wird, wenn der zuletzt gültige Wert des Bewertungszählers kleiner ist als der zuzuweisende Hochtemperatur-Betriebswert. Hierdurch wird erreicht, daß der Wert des Bewertungszählers beim Aktivieren der Hochtemperatur-Betriebsart, d. h. bei Überschreiten der ersten Grenztemperatur, nicht verkleinert wird. Wenn also ohnehin schon auf ein Schaltprogramm mit hohen Schaltdrehzahlen - bei vorangegangener sportlicher Fahrweise - zugegriffen wird, macht es in vielen Fällen wenig Sinn, beim Überschreiten der Grenztemperatur auf ein Schaltprogramm mit niedrigerem Drehzahlniveau zuzugreifen. Außerdem wird durch die vorgeschlagene Maßnahme erreicht, daß nach Überschreiten der ersten Grenztemperatur der Bewertungszähler nicht mehr verkleinert werden kann, solange, bis die dritte Grenztemperatur unterschritten ist.

Wenn der dritte Temperatur-Grenzwert, also die Temperatur, bei welcher die Hochtemperatur-Betriebsart verlassen wird, wenn sie unterschritten wird, um einen vorgebbaren Offset-Betrag kleiner ist als der erste oder der zweite Grenzwert, wird die Applikation vereinfacht. Eine Temperatur-Hysterese kann in Form des Offset-Betrags fest vorgegeben werden.

Aufgrund von Temperatur-Gradienten lassen sich Vorhersagen über die zu erwartenden Temperaturen machen. Bei schnellem Temperaturanstieg kann es daher vorteilhaft sein, bereits früher, d. h. bei kleineren Temperaturwerten, in eine Hochtemperaturart zu wechseln, weshalb in einer Ausgestaltung der Erfindung vorgesehen ist, daß aus dem zeitlichen Verlauf der Temperaturwerte von Motor bzw. Getriebe Temperatur-Gradienten ermittelt werden, und daß der erste und zweite Grenzwert abhängig von dem oder den Temperatur-Gradienten ermittelt wird, wobei großen Temperatur-Gradienten kleinere Grenzwerte zugewiesen werden.

In weiteren Ausgestaltungen der Erfindung werden der erste und der zweite Grenzwert, abhängig von der Außentemperatur, dem Luftdruck oder der Fahrbahnneigung, ermittelt. Insbesondere werden kleinen Außentemperaturwerten, kleinen Luftdruckwerten und größeren Fahrbahnneigungswerten kleinere Grenzwerte zugewiesen. Wenn z. B. trotz geringer Außentemperatur eine hohe Getriebetemperatur erreicht wird, kann darauf geschlossen werden, daß sehr hohe Verlustleistungen erzeugt werden, so daß es sinnvoll ist, schneller in eine Hochtemperatur-Betriebsart zu wechseln.

Schließlich erhält der Fahrer eine Rückmeldung über die Getriebetemperatur, wenn eine optische Anzeige erfolgt, sobald ein Getriebetemperatur-Grenzwert überschritten wird.

Die Erfindung wird anhand der beiliegenden Zeichnungen näher erläutert, wobei
- Fig. 1: einen Programm-Ablaufplan einer Ausführungsform der Erfindung und
- Fig. 2: eine Kennlinie eines Motor-Hochtemperatur-Betriebswerts
zeigen.

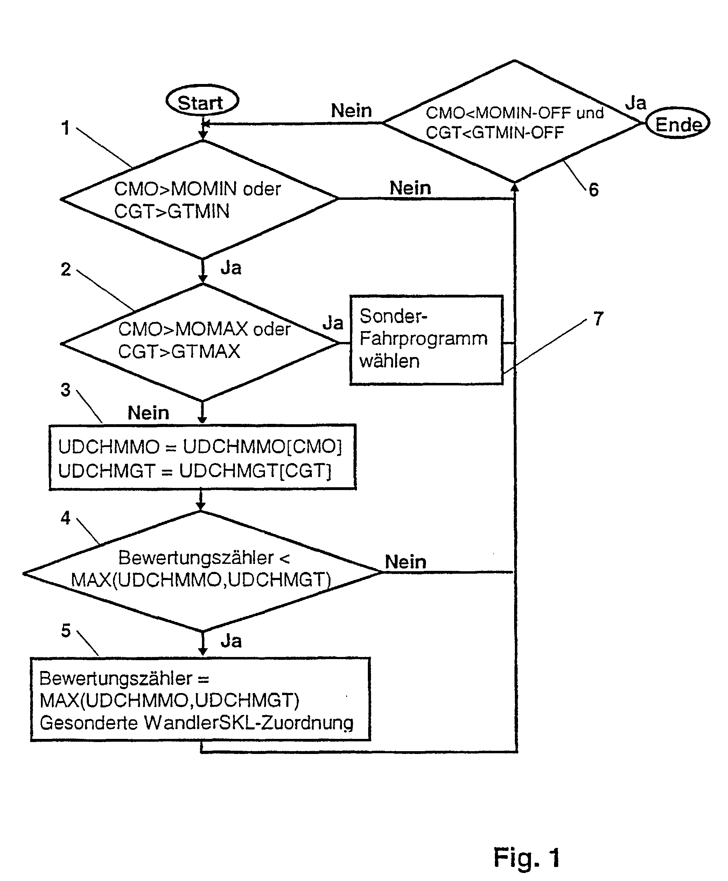

Das Programm nach dem Ablaufplan gemäß Fig. 1 ist in dem elektronischen Steuergerät programmiert und wird im Betrieb zyklisch durchlaufen. Im Abfrageblock 1 wird geprüft, ob die Motor-Kühlwassertemperatur CMO größer als ein erster Grenzwert MOMIN oder die Getriebesumpftemperatur CGT größer als ein erster Getriebetemperatur-Grenzwert GTMIN ist. Ist dies der Fall, wird im Abfrageblock 2 geprüft, ob die Motortemperatur CMO größer als ein zweiter Motortemperatur-Grenzwert MOMAX oder die Getriebesumpftemperatur als ein zweiter Getriebetemperatur-Grenzwert GTMAX ist. Ist dies nicht der Fall, liegen die Temperatur-Grenzwerte also zwischen den ersten und den zweiten Grenzwerten. In diesem Fall wird im Block 3 ein Motor-Hochtemperatur-Betriebswert UDCHMMO abhängig von der Motor-Kühlwassertemperatur CMO und ein Getriebe-Hochtemperatur-Betriebswert UDCHMGT abhängig von der Getriebesumpftemperatur CGT ermittelt.

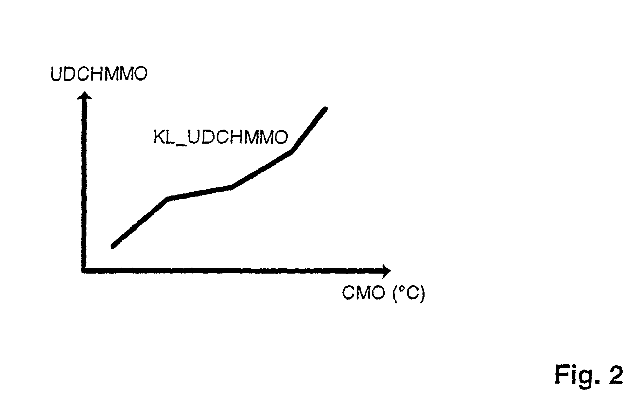

Fig. 2 zeigt die im elektronischen Steuergerät gespeicherte Kennlinie KL UDCHMMO für den Motor-Hochtemperatur-Betriebswert, abhängig von der Motortemperatur CMO. Im Abfrageblock 4 (Fig. 1) wird geprüft, ob der zuletzt gültige Wert des Bewertungszählers kleiner ist als der größere von Motor-Hochtemperatur-Betriebswert und Getriebe-Hochtemperatur-Betriebswert. Ist dies nicht der Fall, wird ohnehin bereits auf ein eher leistungsorientiertes Fahrprogramm mit erhöhtem Drehzahlniveau zugegriffen. Im anderen Fall wird der Bewertungszähler gleich dem größeren der Hochtemperatur-Betriebswerte für Motor bzw. Getriebe gesetzt. Außerdem wird auf ein erstes Hochtemperatur-Wandler-Schaltprogramm zugegriffen.

Dem im Block 5 zugewiesenen Wert des Bewertungszählers ist ein Schaltprogramm zugeordnet, welches auch temperatursenkende Eigenschaften aufweist. Beispielsweise sind die Rückschaltkennlinien dieses Schaltprogramms so gelegt, daß - außer im Anfahrgang - keine kleineren Motordrehzahlen als beispielsweise 2 200 1/min auftreten. Durch das erhöhte Drehzahlniveau einerseits und durch den eingeschränkten Betrieb mit offener Wandlerüberbrückungskupplung andererseits wird in vielen Fällen eine Absenkung der Temperatur erreicht. In Block 6 wird geprüft, ob die Motor-Kühlwassertemperatur CMO kleiner als ein dritter Motor-Temperatur-Grenzwert MOMIN-OFF und die Getriebesumpftemperatur CGT kleiner als ein dritter Getriebetemperatur-Grenzwert GTMIN-OFF sind. Die dritten Grenzwerte sind dabei um den Offset-Betrag OFF kleiner als die ersten Temperatur-Grenzwerte. Wurden die Temperaturen also durch die Hochtemperatur-Betriebsart so weit abgesenkt, daß die Bedingung erfüllt ist, kann die Funktion beendet werden. In diesem Fall wird der Bewertungszähler wieder mit der Fahraktivitäts-Kenngröße belegt.

Wird im Abfrageblock 2 festgestellt, daß die Motor- oder die Getriebetemperatur bereits den zweiten Temperatur-Grenzwert überschritten hat, wird im Block 7 auf ein spezielles optimiertes Hochtemperatur-Fahrprogramm zugegriffen, das sowohl ein Schaltprogramm zur Gangwechselsteuerung als auch ein Wandler-Schaltprogramm zur Ansteuerung der Überbrückungskupplung umfaßt. Dieses spezielle Hochtemperatur-Fahrprogramm bleibt so lange aktiv, bis sowohl der dritte Motortemperatur-Grenzwert als auch der dritte Getriebetemperatur-Grenzwert unterschritten ist.

### Bezugszeichen

- 1: Abfrageblock
- 2: Abfrageblock
- 3: Block
- 4: Abfrageblock
- 5: Block
- 6: Abfrageblock
- 7: Block

- CMO: Motor-Kühlwassertemperatur
- MOMIN: erster Motortemperatur-Grenzwert
- CGT: Getriebesumpftemperatur
- CTMIN: erster Getriebetemperatur-Grenzwert
- MOMAX: zweiter Motortemperatur-Grenzwert
- GTMAX: zweiter Getriebetemperatur-Grenzwert
- UDCHMMO: Motor-Hochtemperatur-Betriebswert
- UDCHMGT: Getriebe-Hochtemperatur-Betriebswert

## Patentansprüche

1. Verfahren zur Steuerung einer Hochtemperatur-Betriebsart eines elektronisch gesteuerten automatischen Schaltgetriebes, wobei mindestens ein Temperaturwert einer aktuellen Motor- (CMO) oder Getriebetemperatur (CGT) laufend gemessen wird, und dieser aktuelle Temperaturwert (CMO, CGT) mit einem oberen Grenzwert (MOMAX, GTMAX) verglichen wird, und wobei zur Gangwechselsteuerung auf ein spezielles Hochtemperatur-Schaltprogramm zugegriffen wird, wenn der aktuelle Temperaturwert größer ist als der obere Grenzwert(MOMAX, GTMAX), **dadurch gekennzeichnet, dass** in einem elektronischen Steuergerät zur Gangwechselsteuerung mehrere Schaltprogramme abgelegt sind, auf welche abhängig von einem normalerweise mit einer Fahraktivitäts-Kenngröße belegten Bewertungszähler zugegriffen wird, wobei einem Minimalwert des Bewertungszählers ein verbrauchsoptimiertes Schaltprogramm und einem Maximalwert des Bewertungszählers ein leistungsoptimiertes Schaltprogramm zugeordnet ist, dass der aktuelle Temperaturwert (CMO, CGT) mit einem unteren, kleineren Grenzwert (MOMIN; GTMIN) verglichen wird und dass, wenn der aktuelle Temperaturwert (CMO, CGT) größer ist als der untere Grenzwert (MOMIN, GTMIN) und den oberen Grenzwert (MOMAX, GTMAX) noch nicht erreicht hat, der Bewertungszähler mit einem Hochtemperatur-Betriebs-Wert (MAX(UDCHMMO, UDCHMGT)) belegt wird, dem ein mehr leistungsoptimiertes Schaltprogramm zugeordnet ist, welches auch temperatursenkende Eigenschaften aufweist.

2. Verfahren nach Anspruch 1, **dadurch gekennzeichnet, dass** dem automatischen Schaltgetriebe ein hydrodynamischer Wandler mit einer Überbrückungskupplung vorgeschaltet ist, und dass auf ein erstes Hochtemperatur-Wandler-Schaltprogramm zugegriffen wird, wenn der aktuelle Temperaturwert (CMO, CGT) größer ist als der untere Grenzwert (MOMIN, GTMIN).

3. Verfahren nach Anspruch 2, **dadurch gekennzeichnet, dass** auf ein zweites Hochtemperatur-Wandler-Schaltprogramm zugegriffen wird, wenn aktuelle Temperaturwert (CMO, CGT) größer ist als der obere Grenzwert (MOMAX, GTMAX).

4. Verfahren nach einem der Ansprüche 1 bis 3, **dadurch gekennzeichnet, dass** der aktuelle Temperaturwert (CMO, CGT) mit einem dritten Grenzwert (MOMIN-OFF, GTMIN-OFF) verglichen wird, und dass der Bewertungszähler wieder mit dem aktuellen Wert der Fahraktivitäts-Kenngröße belegt wird, wenn der aktuelle Temperaturwert (CMO, CGT) kleiner ist als der dritte Grenzwert.

5. Verfahren nach einem der Ansprüche 1 bis 4, **dadurch gekennzeichnet, dass** sowohl eine aktuelle Getriebetemperatur (CGT) als auch eine aktuelle Motortemperatur (CMO) laufend gemessen wird, dass der Motortemperaturwert (CMO) mit einem unteren Motortemperaturgrenzwert (MOMIN) verglichen wird, dass der Getriebetemperaturwert (CGT) mit einem unteren Getriebetemperaturgrenzwert (GTMIN) verglichen wird, und dass der Bewertungszähler mit einem Hochtemperatur-Betriebs-Wert (MAX (UDCHMMO, UDCHMGT)) belegt wird, wenn mindestens einer der Temperaturwerte (CMO, CGT) größer ist als der entsprechende untere Grenzwert (MOMIN, GTMIN).

6. Verfahren nach Anspruch 5, **dadurch gekennzeichnet, dass** der Motortemperaturwert (CMO) mit einem oberen Motortemperaturgrenzwert (MOMAX) verglichen wird, dass der Getriebetemperaturwert (CGT) mit einem oberen Getriebetemperaturgrenzwert (GTMAX) verglichen wird, und dass zur Gangwechselsteuerung direkt auf ein spezielles Hochtemperatur-Schaltprogramm zugegriffen wird, wenn mindestens einer der Temperaturwerte größer ist als der entsprechende obere Grenzwert.

7. Verfahren nach Anspruch 5 oder 6, **dadurch gekennzeichnet, dass** der Bewertungszähler wieder mit dem aktuellen Wert der Fahraktivitäts-Kenngröße belegt wird, wenn der aktuelle Motortemperaturwert (CMO) kleiner ist als ein dritter Motortemperaturgrenzwert (MOMIN-OFF) und der aktuelle Getriebetemperaturwert (CGT) kleiner ist als ein dritter Getriebetemperaturgrenzwert (GTMIN-OFF).

8. Verfahren nach einem der Ansprüche 5 bis 7, **dadurch gekennzeichnet, dass** der Hochtemperatur-Betriebs-Wert (MAX(UDCHMMO, UDCHMGT)) gleich dem Maximum aus einem Motor-Hochtemperatur-Betriebs-Wert (UDCHMMO) und einem Getriebe-Hochtemperatur-Betriebs-Wert (UDCHMGT) ist.

9. Verfahren nach einem der Ansprüche 5 bis 7, **dadurch gekennzeichnet, dass** der Hochtemperatur-Betriebs-Wert gleich dem Mittelwert aus einem Motor-Hochtemperatur-Betriebs-Wert (UDCHMMO) und einem Getriebe-Hochtemperatur-Betriebs-Wert (UDCHMGT) ist.

10. Verfahren nach einem der Ansprüche 1 bis 9, **dadurch gekennzeichnet, dass** der Hochtemperatur-Betriebs-Wert bzw. die Hochtemperatur-Betriebs-Werte (UDCHMMO, UDCHMGT) abhängig von dem aktuellen Motor-(CMO) oder Getriebetemperaturwert (CGT) ermittelt werden, wobei höheren Temperaturwerten höhere Hochtemperatur-Betriebswerte zugeweisen werden.

11. Verfahren nach einem der Ansprüche 1 bis 10, **dadurch gekennzeichnet, dass** dem Bewertungszähler nur dann ein Hochtemperatur-Betriebs-Wert zugewiesen wird, wenn der zuletzt gültige Wert des Bewertungszählers kleiner ist als der zuzuweisende Hochtemperatur-Betriebs-Wert.

12. Verfahren nach einem der Ansprüche 1 bis 11, **dadurch gekennzeichnet, dass** aus dem zeitlichen Verlauf der Temperaturwerte Temperaturgradienten ermittelt werden, und dass die unteren (MOMIN, GTMIN) und oberen Grenzwerte (MOMAX, GTMAX) abhängig von den Temperaturgradienten ermittelt werden, wobei großen Temperaturgradienten kleinere Grenzwerte zugewiesen werden.

13. Verfahren nach einem der Ansprüche 1 bis 12, **dadurch gekennzeichnet, dass** die Außentemperatur gemessen wird, und dass die unteren und oberen Grenzwerte abhängig von dem Wert der Außentemperatur ermittelt werden, wobei insbesondere kleinen Außentemperaturwerten kleinere Grenzwerte zugewiesen werden.

14. Verfahren nach einem der Ansprüche 1 bis 13, **dadurch gekennzeichnet, dass** der Luftdruck gemessen wird, und dass die unteren und oberen Grenzwerte abhängig von dem Wert des Luftdrucks ermittelt werden, wobei insbesondere kleinen Luftdruckwerten kleinere Grenzwerte zugewiesen werden.

15. Verfahren nach einem der Ansprüche 1 bis 14, **dadurch gekennzeichnet, dass** die Fahrbahnneigung ermittelt wird, und dass die unteren und oberen Grenzwerte abhängig von dem Wert der Fahrbahnneigung ermittelt werden, wobei insbesondere größeren Fahrbahnneigungswerten kleinere Grenzwerte zugewiesen werden.

16. Verfahren nach einem der Ansprüche 1 bis 15, **dadurch gekennzeichnet, dass** eine optische Anzeige für den Fahrer erfolgt, wenn ein Getriebetemperaturgrenzwert überschritten wird.

## Claims

1. Method for controlling a high-temperature operating mode of an electronically controlled automatic transmission with at least one temperature value of a current engine (CMO) or transmission temperature (CGT) being continuously measured and this current temperature value (CMO, CGT) being compared with an upper limit value (MOMAX, GTMAX), and whereby gearshift control is managed by a specific high-temperature gearshift program when the current temperature value exceeds the upper limit value (MOMAX, GTMAX), **characterized in that** a number of gearshift programs for gearshift control are stored in an electronic control unit, which are accessed according to an evaluation counter normally provided with a driving activity parameter, whereby a minimum value of the evaluation counter has a consumption-optimized gearshift program assigned to it and a maximum value of the evaluation counter has a performance-optimized gearshift program assigned to it; **in that** the current temperature value (CMO, CGT) is compared with a lower bottom value (MOMIN, GTMIN) and that if the current temperature value (CMO, CGT) exceeds the lower limit value (MOMIN, GTMIN) and has not yet reached the upper limit value (MOMAX, GTMAX), the evaluation counter will be provided with a high-temperature operating value (MAX(UDCHMMO, UDCHMGT)), which will have a more performance-optimized gearshift program featuring temperature-reducing properties assigned to it.

2. Method according to claim 1, **characterized in that** the automatic transmission has an upstream hydrodynamic converter with lockup clutch and that a first high-temperature converter shift program is accessed when the current temperature value (CMO, CGT) exceeds the lower limit value (MOMIN, GTMIN).

3. Method according to claim 2, **characterized in that** a second high-temperature converter shift program is accessed when the current temperature value (CMO, CGT) exceeds the upper limit value (MOMAX, GTMAX).

4. Method according to one of the claims 1 through 3, **characterized in that** the current temperature value (CMO, CGT) is compared with a third limit value (MOMIN-OFF, GTMIN-OFF) and that the evaluation counter is provided with the current value of the driving activity parameter when the current temperature value (CMO, CGT) is smaller than the third limit value.

5. Method according to one of the claims 1 through 4, **characterized in that** both a current transmission temperature (CGT) and a current engine temperature (CMO) are constantly measured, that the engine temperature value (CMO) is compared with a lower engine temperature limit value (MOMIN), that the transmission temperature value (CGT) is compared with a lower transmission temperature limit value (GTMIN) and that the evaluation counter is provided with a high-temperature operating value (MAX (UDCHMMO, UDCHMGT) if at least one of the temperature values (CMO, CGT) exceeds the respective lower limit value (MOMIN, GTMIN).

6. Method according to claim 5, **characterized in that** the engine temperature value (CMO) is compared with an upper engine temperature limit value (MOMAX), that the transmission temperature value (CGT) is compared with an upper transmission temperature limit value (GTMAX), and that a specific high-temperature shift program is accessed for gearshift control when at least one of the temperature values exceeds the respective upper limit value.

7. Method according to claim 5 or 6, **characterized in that** the evaluation counter is again provided with the current value of the driving activity parameter when the current engine temperature value (CMO) is smaller than a third engine temperature limit value (MOMIN-OFF) and the current transmission temperature value (CGT) is smaller than a third transmission temperature limit value (GTMIN-OFF).

8. Method according to one of the claims 5 through 7, **characterized in that** the high-temperature operating value (MAX(UDCHMMO, UDCHMGT)) equals the maximum resulting from a high-temperature engine operating value (UDCHMMO) and a high-temperature transmission operating value (UDCHMGT).

9. Method according to one of the claims 5 through 7, **characterized in that** the high-temperature operating value equals the median resulting from a high-temperature engine operating value (UDCHMMO) and a high-temperature transmission operating value (UDCHMGT).

10. Method according to one of the claims 1 through 9, **characterized in that** the high-temperature operating value or the high-temperature operating values (UDCHMMO, UDCHMGT) are determined dependent on the current engine (CMO) or transmission temperature value (CGT), whereby higher high-temperature operating values are assigned to higher temperature values.

11. Method according to one of the claims 1 through 10, **characterized in that** a high-temperature operating value is assigned to the evaluation counter only when the latest applicable value of the evaluation counter is smaller than the assignable high-temperature operating value.

12. Method according to one of the claims 1 through 11, **characterized in that** temperature gradients are determined on the basis of the temporal course of the temperature values and that the lower (MOMIN, GTMIN) and upper limit values (MOMAX, GTMAX) are determined dependent on the temperature gradients, whereby smaller limit values are assigned to high temperature gradients.

13. Method according to one of the claims 1 through 12, **characterized in that** the ambient temperature is measured and that the lower and upper limit values are determined dependent on the value of the ambient temperature, whereby smaller limit values are assigned to lower ambient temperature values.

14. Method according to one of the claims 1 through 13, **characterized in that** the atmospheric pressure is measured and that the lower and upper limit values are determined dependent on the value of the atmospheric pressure, whereby smaller limit values are assigned to low atmospheric pressure values.

15. Method according to one of the claims 1 through 14, **characterized in that** road inclination is measured and the lower and upper limit values are determined dependent on the value of road inclination, whereby smaller limit values are assigned to higher road inclination values.

16. Method according to one of the claims 1 through 15, **characterized in that** an optical signal informs the driver as soon as a transmission temperature limit value is exceeded.

## Revendications

1. Procédé pour commander un mode de fonctionnement à haute température d'une boîte de vitesses automatique à commande électronique, dans lequel au moins une valeur de température actuelle du moteur (CMO) ou de la boîte de vitesses (CGT) est mesurée continuellement et cette valeur de température actuelle (CMO, CGT) est comparée à une valeur limite supérieure (MOMAX, GTMAX) et dans lequel, pour la commande des changements de rapport, on accède à un programme spécial de commutation à haute température, si la valeur de température actuelle est plus grande que la valeur limite supérieure (MOMAX, GTMAX), **caractérisé en ce que**, dans un appareil de commande électronique pour la commande des changements de rapport, sont enregistrés plusieurs programmes de commutation auxquels on accède en fonction d'un compteur d'évaluation qui est normalement chargé avec une grandeur caractéristique d'activité de conduite, tandis qu'un programme de commutation optimisé pour la consommation est associé à une valeur minimale du compteur d'évaluation, et qu'un programme de commutation optimisé pour les performances est associé à une valeur maximale du compteur d'évaluation, **en ce que** la valeur de température actuelle (CMO, CGT) est comparée à une valeur limite inférieure, plus petite (MOMIN; GTMIN) et **en ce que**, si la valeur de température actuelle (CMO, CGT) est plus grande que la valeur limite inférieure (MOMIN, GTMIN) et n'a pas encore atteint la valeur limite supérieure (MOMAX, GTMAX), le compteur d'évaluation est chargé avec une valeur de fonctionnement à haute température (MAX (UDCHMMO, UDCHMGT)), à laquelle est associé un programme de commutation plus optimisé pour les performances, qui présente aussi des propriétés d'abaissement de la température.

2. Procédé selon la revendication 1, **caractérisé en ce qu'**un convertisseur hydrodynamique équipé d'un embrayage de court-circuitage est monté en amont de la boîte de vitesses automatique, et **en ce qu'**on accède à un premier programme de commutation à convertisseur à haute température si la valeur de température actuelle (CMO, CGT) est plus grande que la valeur limite inférieure (MOMIN, GTMIN).

3. Procédé selon la revendication 2, **caractérisé en ce qu'**on accède à un deuxième programme de commutation à convertisseur à haute température si la valeur de température actuelle (CMO, CGT) est plus grande que la valeur limite supérieure (MOMAX, GTMAX).

4. Procédé selon l'une des revendications 1 à 3, **caractérisé en ce que** la valeur de température actuelle (CMO, CGT) est comparée à une troisième valeur limite (MOMIN-OFF, GTMIN-OFF), et **en ce que** le compteur d'évaluation est de nouveau chargé avec la valeur actuelle de la grandeur caractéristique de l'activité de conduite si la valeur de température actuelle (CMO, CGT) est plus petite que la troisième valeur limite.

5. Procédé selon l'une des revendications 1 à 4, **caractérisé en ce qu'**une température de boîte de vitesses actuelle (CGT) aussi bien qu'une température de moteur actuelle (CMO) sont mesurées continuellement, **en ce que** la valeur de température du moteur (CMO) est comparée à une valeur limite inférieure de la température du moteur (MOMIN), **en ce que** la valeur de température de la boîte de vitesses (CGT) est comparée à une valeur limite inférieure de la température de la boîte de vitesses (GTMIN), et **en ce que** le compteur d'évaluation est chargé avec une valeur de fonctionnement à haute température (MAX (UDCHMMO, UDCHMGT)) si au moins une des valeurs de température (CMO, CGT) est plus grande que la valeur limite inférieure correspondante (MOMIN, GTMIN).

6. Procédé selon la revendication 5, **caractérisé en ce que** la valeur de température du moteur (CMO) est comparée à une valeur limite supérieure de température du moteur (MOMAX), **en ce que** la valeur de température de la boîte de vitesses (CGT) est comparée à une valeur limite supérieure de la température de la boîte de vitesses (GTMAX), et **en ce que** pour la commande du changement de rapport, on accède directement à un programme spécial de commutation à haute température si au moins une des valeurs de température est plus grande que la valeur limite supérieure correspondante.

7. Procédé selon la revendication 5 ou 6, **caractérisé en ce que** le compteur d'évaluation est de nouveau chargé avec la valeur actuelle de la grandeur caractéristique d'activité de conduite si la valeur de température actuelle du moteur (CMO) est plus petite qu'une troisième valeur limite de la température du moteur (MOMIN-OFF) et si la valeur de température actuelle de la boîte de vitesses (CGT) est plus petite qu'une troisième valeur limite de température de la boîte de vitesses (GTMIN-OFF).

8. Procédé selon l'une des revendications 5 à 7, **caractérisé en ce que** la valeur de fonctionnement à haute température (MAX (UDCHMMO, UDCHMGT)) est égale au maximum d'une valeur de fonctionnement à haute température du moteur (UDCHMMO) et d'une valeur de fonctionnement à haute température de la boîte de vitesses (UDCHMGT).

9. Procédé selon l'une des revendications 5 à 7, **caractérisé en ce que** la valeur de fonctionnement à haute température est égale à la moyenne d'une valeur de fonctionnement à haute température du moteur (UDCHMMO) et d'une valeur de fonctionnement à haute température de la boîte de vitesses (UDCHMGT).

10. Procédé selon l'une des revendications 1 à 9, **caractérisé en ce que** la valeur de fonctionnement à haute température ou les valeurs de fonctionnement à haute température (UDCHMMO, UDCHMGT) sont déterminées en fonction de la valeur de température actuelle du moteur (CMO) ou de la boîte de vitesses (CGT), des valeurs de fonctionnement à haute température plus élevées étant affectées à des valeurs de température plus élevées.

11. Procédé selon l'une des revendications 1 à 10, **caractérisé en ce qu'**une valeur de fonctionnement à haute température n'est appliquée au compteur d'évaluation que si la valeur valable la plus récente du compteur d'évaluation est plus petite que la valeur de fonctionnement à haute température à affecter.

12. Procédé selon l'une des revendications 1 à 11, **caractérisé en ce que** des gradients de température sont calculés sur la base de la courbe de variation dans le temps des valeurs de température, et **en ce que** les valeurs limites inférieures (MOMIN, GTMIN) et supérieures (MOMAX, GTMAX) sont déterminées en fonction des gradients de température, de plus petites valeurs limites étant affectées à de grands gradients de température.

13. Procédé selon l'une des revendications 1 à 12, **caractérisé en ce que** la température extérieure est mesurée, et **en ce que** les valeurs limites inférieures et supérieures sont déterminées en fonction de la température extérieure, de plus petites valeurs limites étant en particulier associées à de petites valeurs de la température extérieure.

14. Procédé selon l'une des revendications 1 à 13, **caractérisé en ce que** la pression atmosphérique est mesurée, et **en ce que** les valeurs limites supérieures et inférieures sont calculées en fonction de la pression atmosphérique, de plus petites valeurs limites étant en particulier affectées à de petites valeurs de la pression atmosphérique.

15. Procédé selon l'une des revendications 1 à 14, **caractérisé en ce que** la pente de la chaussée est détectée, et **en ce que** les valeurs limites inférieures et supérieures sont calculées en fonction de la valeur de la pente de la chaussée, de plus petites valeurs limites étant affectées en particulier à de plus grandes valeurs de la pente de la chaussée.

16. Procédé selon l'une des revendications 1 à 15, **caractérisé en ce qu'**une indication optique pour le conducteur est exécutée si une valeur limite de la température de la boîte de vitesses est dépassée.
